# EUROPÄISCHE PATENTSCHRIFT

(11) **EP 1 881 185 B1**
(45) Veröffentlichungstag und Bekanntmachung des Hinweises auf die Patenterteilung: **07.09.2016**
(21) Anmeldenummer: 07011843.5
(22) Anmeldetag: 16.06.2007
(51) Int. Cl.: F02D 41/14, C10L 1/14, F02D 19/06

(54) **Verfahren zum Betrieb einer Mehr-Kraftstoff Brennkraftmaschine**
Method for operating a multi-fuel combustion engine
Procédé de fonctionnement d'un moteur à combustion interne à plusieurs combustibles

(30) Priorität: 22.07.2006 DE 102006033988
(43) Veröffentlichungstag der Anmeldung: 23.01.2008
(73) Patentinhaber: Volkswagen Aktiengesellschaft, 38440 Wolfsburg (DE)
(72) Erfinder: Bergmann, Helge, 38126 Braunschweig (DE); Kirschke, Frank, 38102 Braunschweig (DE)

(56) Entgegenhaltungen:
- EP-A2- 0 697 512
- WO-A1-2005/108764
- US-A- 5 615 660

## Beschreibung

Die Erfindung betrifft ein Verfahren zum Betrieb einer Mehr-Kraftstoff-Brennkraftmaschine mit einer Lambda-Sonde in einem Abgasstrang und einer Lambda-Regelung zur Regelung eines Gemisches aus einem Kraftstoff und Luft.

Ein solches Verfahren ist aus der Druckschrift US 5 615 660A bekannt. Eine Warmlaufphase der Brennkraftmaschine wird mit einem erstem Kraftstoff betrieben und nach der Warmlaufphase auf einen Betrieb mit einem zweiten Kraftstoff umgestellt wird, wobei in der Warmlaufphase der Brennkraftmaschine und nach Einsetzen der Lambda-Regelung eine Regelabweichung der Lambda-Regelung zur Adaption des Gemisches aus dem ersten Kraftstoff und Luft ermittelt wird. Die Regelabweichung wird in der Warmlaufphase mit zumindest einem ersten Parameter beaufschlagt und es wird eine korrigierte Regelabweichung abgeleitet, welche die Regelabweichung der Lambda-Regelung zur Regelung der Gemischbildung aus dem ersten Kraftstoff und Luft der betriebswarmen Brennkraftmaschine abbildet.

Um ein Kraftfahrzeug mit mehreren Kraftstoffarten, beispielsweise mit flüssigem als auch mit gasförmigen Kraftstoff zu betreiben, sind Mehr-Kraftstoff-Motorkonzepte entwickelt worden, die den Betrieb eines Verbrennungsmotors mit mehreren Kraftstoffarten ermöglichen. Derartige Konzepte sind beispielsweise in der DE 600 05 751 T2, der DE 101 46 063 A1 und der DE 101 21 609 A1 beschrieben.

Da bei einem bivalenten Betrieb der Verbrennungsmotor für den Betrieb mit flüssigem als auch mit gasförmigen Kraftstoff ausgelegt sein muss, kommt es beim Erdgasbetrieb zu Leistungseinbußen gegenüber dem Benzinbetrieb, da ein mit Erdgas betriebener Ottomotor nicht optimal auf den Erdgasbetrieb eingestellt ist. Diese sind in der Regel auf den Benzinbetrieb optimiert. Für den Erdgasbetrieb wäre eine höhere Verdichtung nötig, um den Energiegehalt von Erdgas besser ausnutzen zu können. Dadurch verschlechtert sich das Fahrverhalten in Start- und Beschleunigungsphasen beim Betrieb des Verbrennungsmotors mit gasförmigen Kraftstoff, sodass es auf Grund eines besseren Startverhaltens, geringerer Gesamtemission und/oder eines besseren Fahrverhaltens erforderlich sein kann, zunächst mit flüssigem Kraftstoff zu starten und dann auf den gasförmigen Kraftstoff umzuschalten.

Beim Kaltstart der Brennkraftmaschine mit flüssigem Kraftstoff wird zur Vermeidung von Problemen, beispielsweise in Folge von Kondensation des Kraftstoffs an noch kalten Bereichen des Ansaugrohres oder mangelnder Verdampfung des Kraftstoffs, das Kraftstoff-/Luft-Gemisch in der Start- bzw. Warmlaufphase zeit- oder temperaturabhängig angefettet. Das Maß der Anfettung ist dabei auch von der Kraftstoffqualität abhängig. Diese kann jedoch stark schwanken. Um eine ausreichende Anfettung bis zum Erreichen des betriebswarmen Zustandes der Brennkraftmaschine sicher zu stellen ist daher eine auf die schlechteste Kraftstoffqualität ausgelegte Anfettung üblich. Diese geht oft über das notwendige Maß hinaus und führt zu einer erhöhten Schadstoffemission.

Um eine Anpassung der Anfettung an ein tatsächlich notwendiges Maß zu erreichen, wird gemäß der DE 195 01 458 A1 die Kraftstoffanreicherung bis zum betriebswarmen Zustand der Brennkraftmaschine zeit- oder temperaturabhängig gesteuert, wobei eine Einspritzimpulsbreite mit einem Korrekturwert multiplikativ verknüpft wird, der beim Start deutlich größer als Eins ist und bis zum betriebswarmen Zustand der Brennkraftmaschine den Wert von Eins erreicht. Nach Einsetzen der Lambda-Regelung in der Warmlaufphase wird aus dem Verhalten der Lambda-Regelung bis zum betriebswarmen Zustand der Brennkraftmaschine ein adaptierter Korrekturwert zur Steuerung der Anfettung für den nächsten Startvorgang abgeleitet. Ein Ausgleich von Abweichungen, die durch den Betrieb der Brennkraftmaschine im betriebswarmen Zustand bedingt sind, ist mit einer derartigen Anpassung nicht zu erreichen.

Eine Adaption des Kraftstoff-Luft-Gemisches zum Ausgleich aller Gemischabweichungen erfolgt daher üblicherweise über die Abweichungen des Regeleingriffs der Gemischregelung bei betriebswarmen Zustand der Brennkraftmaschine.

Auf Grund technischer oder gesetzlicher Anforderungen kann es jedoch dazu kommen, dass ein erneutes Umschalten vom im betriebswarmen Zustand verwendeten zweiten Kraftstoff auf den in der Start- und Warmlaufphase verwendeten ersten Kraftstoff nach der Start- und Warmlaufphasephase nicht mehr möglich oder erlaubt ist und die Mehr-Kraftstoff-Brennkraftmaschine im betriebswarmen Zustand quasi-monovalent mit dem zweiten Kraftstoff betrieben wird, so dass eine Adaption des Kraftstoff-Luft-Gemisches für den in der Start- und Warmlaufphase verwendeten ersten Kraftstoffes zum Ausgleich von allen Gemischabweichungen nicht möglich ist.

Aufgabe der Erfindung ist es, die Adaption des Kraftstoff-Luft-Gemisches für einen ersten, in der Start- und Warmlaufphase verwendeten Kraftstoff beim Betrieb einer Mehr-Kraftstoff-Brennkraftmaschine zu verbessern. Eine weitere Aufgabe der Erfindung ist es, das Fahrverhalten von Fahrzeugen mit einer Mehr-Kraftstoff-Brennkraftmaschine in der Start- und Warmlaufphase bei einer Verringerung der Gesamtemission zu verbessern.

Die Lösung der Aufgabe gelingt mit einem Verfahren zum Betrieb einer Mehr-Kraftstoff-Brennkraftmaschine gemäß Anspruch 1.

Weitere vorteilhafte Ausgestaltungen finden sich in den abhängigen Ansprüchen.

Gemäß der Erfindung wird zum Betrieb einer Mehr-Kraftstoff-Brennkraftmaschine mit einer Lambda-Sonde in einem Abgasstrang und einer Lambda-Regelung zur Regelung einer Gemischbildung aus einem Kraftstoff und Luft, in einer Warmlaufphase die Brennkraftmaschine mit einem erstem Kraftstoff betrieben und nach der Warmlaufphase auf einen Betrieb mit einem zweiten Kraftstoff umgestellt.

Dabei wird in der Warmlaufphase der Brennkraftmaschine eine Regelabweichung Δλ_{Warmlauf} der Lambda-Regelung zur Adaption der Gemischbildung aus dem ersten Kraftstoff und Luft ermittelt.

Die Regelabweichung Δλ_{Warmlauf} wird mit zumindest einem ersten Parameter beaufschlagt und eine korrigierte Regelabweichung Δλ_{Betriebswarm} abgeleitet, welche die Regelabweichung der Lambda-Regelung zur Regelung der Gemischbildung aus dem ersten Kraftstoff und Luft der betriebswarmen Brennkraftmaschine abbildet.

Der Parameter ist aus zumindest einer Betriebskenngröße der Brennkraftmaschine abgeleitet.

Erfindungsgemäß ist vorgesehen, dass die Regelabweichung Δλ_{Warmlauf} mit zumindest einem weiteren Parameter, welcher aus einer Kennlinie als Funktion einer Ansauglufttemperatur und/oder aus einer Kennlinie als Funktion einer Umgebungshöhe und/oder aus einer Kennlinie als Funktion einer Kraftstofftemperatur und/oder aus einer Kennlinie als Funktion einer Kraftstoffmasse abgeleitet wird, beaufschlagt wird.

Aus der mit dem ersten Parameter beaufschlagten Regelabweichung Δλ_{Warmlauf} zur Ableitung der korrigierte Regelabweichung Δλ_{Betriebswarm} und durch Beaufschlagung mit zumindest einem weiteren Parameter kann eine Korrektur zur Adaption der Gemischbildung aus dem ersten Kraftstoff und Luft für die Warmlaufphase abgeleitet werden, wobei die korrigierte Regelabweichung Δλ_{Betriebswarm} im Bedarfsfall auch für den Betrieb der Brennkraftmaschine im betriebswarmen Zustand verwendet werden kann. Die Adaption gleicht dabei Veränderungen der Kraftstoffqualität sowie Abweichungen, die durch die Bauteile der Brennkraftmaschine und den Betrieb der Brennkraftmaschine bedingt sind, aus.

Aus der erfindungsgemäß in der Warmlaufphase der Brennkraftmaschine ermittelten Regelabweichung Δλ_{Betriebswarm} kann insbesondere eine Korrektur zur Adaption der Einstellung und Regelung der Gemischbildung aus dem ersten Kraftstoff und Luft abgeleitet werden, ohne dass die Brennkraftmaschine im betriebswarmen Zustand mit dem ersten Kraftstoff betrieben wurde. Voraussetzung ist eine betriebsbereite Lambda-Sonde in der Warmlaufphase, mit deren Signal die Lambda-Regelung der Gemischbildung aus einem Kraftstoff und Luft erfolgt.

Als Warmlaufphase wird im Sinne der Erfindung eine Phase ab einem Kaltstart des Motors bis zum Erreichen des betriebswarmen Zustandes der Brennkraftmaschine definiert.

Als erster Kraftstoff wird vorzugsweise ein flüssiger Kraftstoff, beispielsweise Benzin oder Diesel verwendet und als zweiter Kraftstoff wird vorzugsweise ein gasförmiger Kraftstoff, beispielsweise Erdgas (CNG Compressed Natural Gas), Wasserstoff, Flüssigerdgas (LNG Liquified Natural Gas) oder Flüssiggas (LPG Liquified Petroleum Gas) verwendet.

Die Erfindung wird im Weiteren an Hand von Ausführungsbeispielen näher beschrieben. Es zeigen dazu:
- Figur 1:: einen zeitlichen Ablauf einer Adaption in einer Warmlaufphase des Fahrzeugmotors
- Figur 2:: einen schematischen Ablauf der Ermittlung der korrigierten Regelabweichung Δλ_{Betriebswarm}
- Figur 3:: einen Umschaltvorgang von Benzin auf Gas
- Figur 4:: einen gleitenden Umschaltvorgang von Benzin auf Gas

Das erfindungsgemäße Verfahren ist beispielsweise anwendbar auf die Adaption einer Gemischbildung aus Benzin und Luft für ein Fahrzeug mit einem Mehr-Kraftstoff-Motor, der sowohl mit Benzin als auch mit Erdgas betreibbar ist.

Das Konzept zum Betrieb des Fahrzeuges ist zur Optimierung des Startverhaltens und zur Verringerung der Gesamtemission derart ausgelegt, dass der Fahrzeugmotor zunächst beim Starten mit Benzin betrieben wird und nach einer Warmlaufphase auf den Betrieb mit Erdgas umgestellt wird, wobei der gesamte weitere Fahrbetrieb ausschließlich mit Erdgas durchgeführt wird. Eine Umstellung auf Benzin ist nur im Notbetrieb, beispielsweise bei defektem CNG-System oder bei leerem CNG-Tank, vorgesehen. Dadurch wird der Fahrzeugmotor regulär im betriebswarmen Zustand quasi-monovalent mit Erdgas betrieben.

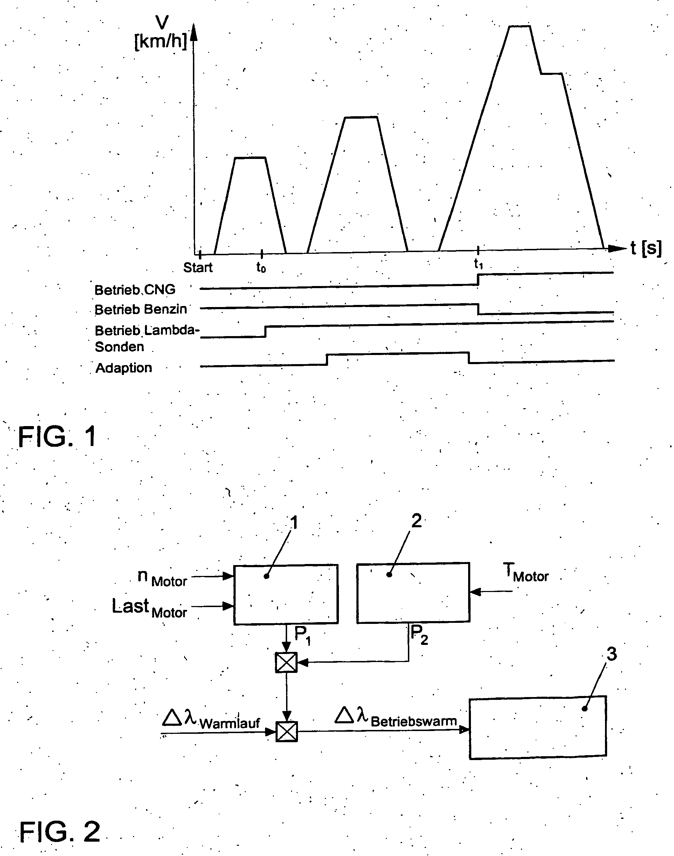

Fig. 1 zeigt einen beispielhaften zeitlichen Ablauf einer Adaption der Gemischbildung in der Warmlaufphase. Nach dem Start des Fahrzeugmotors im Benzin-Betrieb setzt zum Zeitpunkt t₀, mit der Betriebsbereitschaft der Lambda-Sonde im Abgasstrang, die Lambda-Regelung ein. Die Warmlaufphase endet zum Umschaltzeitpunkt t₁, bei welchem auf den Erdgas-Betrieb umgestellt wird. Eine Ermittlung der korrigierten Regelabweichung Δλ_{Betriebswarm} zur Adaption der Gemischbildung aus Benzin und Luft erfolgt innerhalb der Warmlaufphase des Fahrzeugmotors, ab dem Zeitpunkt t₀.

Die Ermittlung der korrigierten Regelabweichung Δλ_{Betriebswarm} zur Adaption der Gemischbildung ist beispielhaft in Fig. 2 schematisch dargestellt. Als Ausgangsgröße wird die Regelabweichung Δλ_{Warmlauf} der Lambda-Regelung der Gemischbildung Benzin/ Luft ermittelt. Die ermittelte Regelabweichung Δλ_{Warmlauf} wird mit einem ersten Parameter P₁ und/oder einem zweiten Parameter P₂ beaufschlagt und die korrigierte Regelabweichung Δλ_{Betriebswarm} abgeleitet, welche die Regelabweichung der Lambda-Regelung zur Regelung der Gemischbildung Benzin/Luft des betriebswarmen Fahrzeugmotors abbildet.

In einer vorteilhaften Ausgestaltung wird der erste Parameter P₁ beispielsweise aus einem Kennfeld 1 als Funktion von der Drehzahl n und der Last des Fahrzeugmotors und der zweite Parameter P₂ beispielsweise aus einer Kennlinie 2 als Funktion einer Temperatur des Fahrzeugmotors abgeleitet.

Das Kennfeld 1 und/oder die Kennlinie 2 sind vorzugsweise in einem Speicher der Motorsteuerung abgelegt. Die abgelegten Werte des Kennfeldes 1 und/oder der Kennlinie 2 sind beispielsweise Erfahrungswerte, aus Modellen berechnete und/oder simulierte Werte.

Aus der mit dem ersten Parameter P₁ und/oder zweiten Parameter P₂ korrigierten Regelabweichung Δλ_{Betriebswarm} wird beispielsweise bei einem flüssigen Kraftstoff ein Korrekturfaktor für die Einspritzzeit gebildet.

Vorzugsweise werden die Werte der korrigierten Regelabweichung Δλ_{Betriebswarm} und/oder die daraus berechneten Korrekturfaktoren für eine Adaption der Gemischbildung in einem Datenspeicher 3 der Motorsteuerung abgelegt, so dass die ermittelte korrigierte Regelabweichung Δλ_{Betriebswarm} und/oder die daraus gebildeten Korrekturfaktoren für eine Adaption der Gemischbildung in der nächsten Warmlaufphase zur Verfügung stehen.

Für den Fall des Notbetriebes des Fahrzeugmotors im betriebswarmen Zustand mit Benzin stehen die adaptierten Werte zur Gemischbildung ebenfalls zur Verfügung.

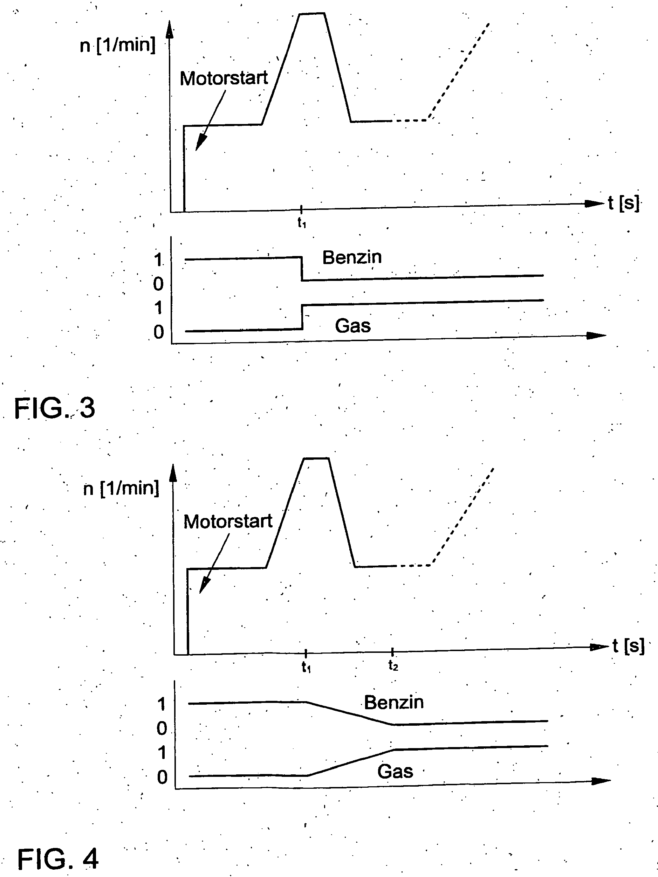

Bei Erreichen des betriebswarmen Zustandes erfolgt eine Umstellung auf Erdgas oder einen anderen zweiten Kraftstoff wie beispielsweise in Fig. 3 dargestellt, zum Umschaltzeitpunktes t₁.

Das Erreichen des betriebswarmen Zustandes zum Umschaltzeitpunktes t₁ wird vorzugsweise durch zumindest eine Betriebskenngrößen der Brennkraftmaschine, insbesondere das Erreichen einer definierten Temperatur und/oder einer umgesetzten Wärmemenge im Bereich der Brennkraftmaschine angezeigt.

In einer weiteren vorteilhaften Ausgestaltung der Efindung wird in der Warmlaufphase, wie beispielsweise in den Fig. 3 und 4 gezeigt, zumindest bis zum Umschaltzeitpunkt t₁ die Drehzahl der Brennkraftmaschine erhöht. Durch eine erhöhte Leerlaufdrehzahl wird ein höherer Abgasmassenstrom durchgesetzt. Dies führt zu einem früheren Erreichen der Arbeitstemperatur des Katalysators und damit zu einer Verkürzung der Warmlaufphase.

### Bezugszeichenliste

- 1: Kennfeld als Funktion von Last und Drehzahl des Motors
- 2: Kennlinie als Funktion der Temperatur des Motors
- 3: Datenspeicher der Motorsteuerung

- t₀: Zeitpunkt Betriebsbereitschaft der Lambda-Sonde
- t₁: Umschaltzeitpunkt
- t₂: Zeitpunkt gleitende Umstellung beendet

- P₁: erster Parameter
- P₂: zweiter Parameter

## Patentansprüche

1. Verfahren zum Betrieb einer Mehr-Kraftstoff-Brennkraftmaschine mit einer Lambda-Regelung zur Regelung einer Gemischbildung aus einem Kraftstoff und Luft, bei welchem in einer Warmlaufphase die Brennkraftmaschine mit einem erstem Kraftstoff betrieben wird und nach der Warmlaufphase auf einen Betrieb mit einem zweiten Kraftstoff umgestellt wird, wobei in der Warmlaufphase der Brennkraftmaschine eine Regelabweichung Δλ_{Warmlauf} der Lambda-Regelung zur Adaption der Gemischbildung aus dem ersten Kraftstoff und Luft ermittelt wird, **wobei** die Beaufschlagung der Regelabweichung Δλ_{Warmlauf} mit zumindest einem ersten, von zumindest einer Betriebskenngröße der Brennkraftmaschine abhängigen Parameter eine korrigierte Regelabweichung Δλ_{Betriebswarm} abgeleitet wird, welche die Regelabweichung der Lambda-Regelung zur Regelung der Gemischbildung aus erstem Kraftstoff und Luft der betriebswarmen Brennkraftmaschine abbildet, **dadurch gekennzeichnet, dass** die Regelabweichung Δλ_{Warmlauf} mit zumindest einem weiteren Parameter, welcher aus einer Kennlinie als Funktion einer Ansauglufttemperatur und/oder aus einer Kennlinie als Funktion einer Umgebungshöhe und/oder aus einer Kennlinie als Funktion einer Kraftstofftemperatur und/oder aus einer Kennlinie als Funktion einer Kraftstoffmasse abgeleitet wird, beaufschlagt wird.

2. Verfahren nach Anspruch 1, **dadurch gekennzeichnet, dass** der erste Parameter aus einem Kennfeld als Funktion von der Drehzahl und der Last der Brennkraftmaschine abgeleitet wird.

3. Verfahren nach einem der vorhergehenden Ansprüche, **dadurch gekennzeichnet, dass** ein zweiter Parameter aus einer Kennlinie als Funktion einer Temperatur der Brennkraftmaschine abgeleitet wird.

4. Verfahren nach einem der vorhergehenden Ansprüche, **dadurch gekennzeichnet, dass** die korrigierte Regelabweichung Δλ_{Betriebswarm} in einem Speicher einer Motorsteuerung abgelegt wird.

5. Verfahren nach einem der vorhergehenden Ansprüche, **dadurch gekennzeichnet, dass** aus der korrigierten Regelabweichung Δλ_{Betriebswarm} eine Korrektur für die Einstellung der Gemischbildung aus erstem Kraftstoff und Luft in der Warmlaufphase der Brennkraftmaschine abgeleitet wird.

6. Verfahren nach Anspruch 6, **dadurch gekennzeichnet, dass** aus der korrigierten Regelabweichung Δλ_{Betriebswarm} eine Korrektur für die Einspritz- oder Einblaszeit des ersten Kraftstoffs in der Warmlaufphase abgeleitet wird.

7. Verfahren nach einem der vorhergehenden Ansprüche, **dadurch gekennzeichnet, dass** die Umstellung auf den zweiten Kraftstoff gleitend erfolgt.

8. Verfahren nach einem der vorhergehenden Ansprüche, **dadurch gekennzeichnet, dass** die Umstellung auf den zweiten Kraftstoff in Abhängigkeit von einer Temperatur im Bereich der Brennkraftmaschine und/oder einer umgesetzten Wärmemenge erfolgt.

## Claims

1. Method for operating a multi-fuel internal combustion engine with a lambda controller for controlling a formation of a mixture composed of a fuel and air, in which in a warming up phase the internal combustion engine is operated with a first fuel, and after the warming up phase switching over to operation with a second fuel is carried out, wherein in the warming up phase of the internal combustion engine a control error Δλ_{warmup} of the lambda control is determined in order to adapt the formation of the mixture composed of the first fuel and air, **wherein** a corrected control error Δλ_{opwarm} is derived from the application of at least a first parameter dependent on at least one operating characteristic variable of the internal combustion engine to the control error Δλ_{warmup}, which corrected control error models the control error of the lambda controller for the control of the formation of a mixture from a first fuel and air of the operationally warm internal combustion engine, **characterized in that** at least one further parameter, which is derived from a characteristic curve as a function of an intake air temperature and/or from a characteristic curve as a function of an ambient altitude and/or from a characteristic curve as a function of a fuel temperature and/or from a characteristic curve as a function of a fuel mass is applied to the control error Δλ_{warmup}.

2. Method according to Claim 1, **characterized in that** the first parameter is derived from a characteristic diagram as a function of the rotational speed and the load of the internal combustion engine.

3. Method according to one of the preceding claims, **characterized in that** a second parameter is derived from a characteristic curve as a function of a temperature of the internal combustion engine.

4. Method according to one of the preceding claims, **characterized in that** the corrected control error Δλ_{opwarm} is stored in a memory of an engine controller.

5. Method according to one of the preceding claims, **characterized in that** a correction for the setting of the formation of mixture from a first fuel and air in the warming up phase of the internal combustion engine is derived from the corrected control error Δλ_{opwarm}.

6. Method according to Claim 6, **characterized in that** a correction for the injection time or blowing in time of the first fuel in the warming up phase is derived from the correct control error Δλ_{opwarm}.

7. Method according to one of the preceding claims, **characterized in that** the switching over to the second fuel takes place in a sliding fashion.

8. Method according to one of the preceding claims, **characterized in that** the switching over to the second fuel takes place as a function of a temperature in the region of the internal combustion engine and/or a converted quantity of heat.

## Revendications

1. Procédé destiné à faire fonctionner un moteur à combustion interne multi-carburants avec une régulation lambda destinée à réguler la création d'un mélange à partir de carburant et d'air, lors duquel, dans une phase de préchauffage, le moteur à combustion interne fonctionne avec un premier carburant et après la phase de préchauffage, il passe dans un mode avec un deuxième carburant, dans la phase de préchauffage du moteur à combustion interne, un écart de réglage Δλ_{préchauffage} de la régulation lambda étant déterminé pour l'adaptation de la création du mélange à partir du premier carburant et d'air, de la soumission de l'écart de réglage Δλ_{préchauffage} à au moins un premier paramètre qui dépend d'au moins une caractéristique de fonctionnement du moteur à fonctionnement interne étant dérivé un écart de réglage Δλ_{température} de service corrigé, lequel reproduit l'écart de réglage de la régulation lambda pour le réglage de la création du mélange d'un premier carburant et d'air du moteur à combustion interne à température de service, **caractérisé en ce que** l'écart de réglage Δλ_{préchauffage} est soumis à au moins un paramètre supplémentaire, lequel est dérivé d'une courbe caractéristique en tant que fonction d'une température de l'air aspiré et/ou d'une courbe caractéristique en tant que fonction d'une hauteur environnante et/ou d'une courbe caractéristique en tant que fonction d'une température de carburant et/ou à partir d'une courbe caractéristique en tant que fonction d'une masse de carburant.

2. Procédé selon la revendication 1, **caractérisé en ce que** le premier paramètre est dérivé d'un champ caractéristique en tant que fonction du régime et de la charge du moteur à combustion interne.

3. Procédé selon l'une quelconque des revendications précédentes, **caractérisé en ce qu'**un deuxième paramètre est dérivé d'une courbe caractéristique en tant que fonction d'une température du moteur à combustion interne.

4. Procédé selon l'une quelconque des revendications précédentes, **caractérisé en ce que** l'écart de réglage Δλ_{température} de service corrigé est sauvegardé dans une mémoire d'un système de commande du moteur.

5. Procédé selon l'une quelconque des revendications précédentes, **caractérisé en ce qu'**à partir de l'écart de réglage Δλ_{température} de service corrigé, il est dérivé une correction pour le réglage de la création du mélange d'un premier carburant et d'air, dans la phase de préchauffage du moteur à combustion interne.

6. Procédé selon la revendication 6, **caractérisé en ce qu'**à partir de l'écart de réglage Δλ_{température} de service corrigé, il est dérivé une correction pour le temps d'injection ou d'insufflation du premier carburant dans la phase de réchauffage.

7. Procédé selon l'une quelconque des revendications précédentes, **caractérisé en ce que** le changement pour le deuxième carburant s'effectue progressivement.

8. Procédé selon l'une quelconque des revendications précédentes, **caractérisé en ce que** le changement pour le deuxième carburant s'effectue en fonction d'une température dans la zone du moteur à combustion interne et/ ou d'une quantité de chaleur convertie.
